Europäisches Patentamt

European Patent Office

Office européen des brevets

(19)

(11) **EP 0 880 104 B1**

(12) **FASCICULE DE BREVET EUROPEEN**

(45) Date de publication et mention
de la délivrance du brevet:
**10.12.2003 Bulletin 2003/50**

(51) Int Cl.⁷: **G06K 9/00**

(21) Numéro de dépôt: **98401059.5**

(22) Date de dépôt: **30.04.1998**

(54) **Capteur optique d'empreinte digitale à éclairage impulsionnel**

Optischer Fingerabdrucksensor mit Impulsbeleuchtung

Optical fingerprintsensor with pulselighting

(84) Etats contractants désignés:
**AT BE DE DK FI GB NL SE**

(30) Priorité: **21.05.1997 FR 9706170**

(43) Date de publication de la demande:
**25.11.1998 Bulletin 1998/48**

(73) Titulaire: **SAGEM SA**
**75116 Paris (FR)**

(72) Inventeurs:
• **Leguilloux, Yann**
**95000 Cergy (FR)**

• **Schmitt, Bernard**
**95000 Cergy (FR)**

(74) Mandataire: **Bloch, Gérard**
**2, square de l'Avenue du Bois**
**75116 Paris (FR)**

(56) Documents cités:
**EP-A- 0 194 783     EP-A- 0 640 933
EP-A- 0 685 814     EP-A- 0 950 977
WO-A-94/22371       US-A- 4 708 882
US-A- 4 917 987     US-A- 5 233 404**

**Description**

L'invention concerne un système destiné à contrôler l'identité des personnes par la reconnaissance de leur empreinte digitale.

Un tel système peut être utilisé pour sécuriser l'accès à un lieu protégé, ou encore, à titre d'exemple, pour vérifier que le porteur d'une carte personnelle (d'identité, d'assuré social, etc.) en est bien titulaire.

L'identification d'une personne par reconnaissance de son empreinte digitale consiste à prendre une image de cette empreinte, à l'aide d'un capteur, généralement optique, capable de détecter par contraste le relief des creux et des bosses formés par les sillons à la surface du doigt et formant ce qui sera appelé par la suite empreinte digitale. L'image est ensuite traitée par traitement numérique d'image et peut être comparée à une base de données, associée au capteur, contenant une pluralité d'images d'empreinte digitale, stockées sous forme de données numériques, et respectivement associées aux identités des personnes autorisées à accéder au lieu protégé, pour reprendre cet exemple. En cas d'identité entre l'empreinte détectée et une empreinte de la base de données, l'accès est autorisé.

Dans le cas de l'utilisation d'une carte personnelle, à puce par exemple, on compare l'image d'empreinte détectée à une image stockée au préalable dans la puce de la carte, et correspondant à l'empreinte du titulaire de la carte.

Un capteur optique de détection d'empreinte digitale comprend généralement une caméra de type CCD (Charge Coupled Device) de prise de vues, un corps optique, par exemple un prisme présentant une face sur laquelle la personne à identifier doit poser son doigt, et une diode électroluminescente (LED) d'éclairage de l'empreinte.

La performance de tels capteurs dépend notamment de leur faible sensibilité à la lumière ambiante.

Le problème de la sensibilité du capteur à l'éclairage ambiant résulte d'une part du rapport entre le flux utile provenant de la diode d'éclairage de l'empreinte et le flux parasite provenant de. sources lumineuses extérieures et, d'autre part, de la présence inévitable d'une pollution sur la face support d'empreinte digitale, comportant notamment des taches de gras laissées par les doigts. De telles taches de gras font office de lentilles et permettent à la lumière provenant de l'éclairage ambiant d'être transmise dans le corps optique du capteur, au lieu d'être réfléchie par la face support d'empreinte. En conséquence, même et déjà en l'absence de doigt posé sur la face support d'empreinte, la caméra du capteur risque de détecter l'image des taches de gras et peut par erreur l'assimiler à une image d'empreinte.

L'invention propose de résoudre ce problème de sensibilité lumineuse du capteur.

A cet effet, elle concerne un capteur optique d'empreinte digitale comprenant un corps de transmission optique; une face support de l'empreinte digitale, des moyens de prise de, vues et une source d'éclairage de l'empreinte digitale à travers le corps de transmission optique, le capteur étant caractérisé par le fait que la source d'éclairage est impulsionnelle et reliée aux moyens de prise de vues par l'intermédiaire d'un dispositif de synchronisation intégrant des moyens pour déclencher et arrêter la source impulsionnelle et des moyens pour contrôler l'intégration des moyens de prise de vues pendant des périodes d'intégration, le dispositif de synchronisation étant agencé pour faire fonctionner la source impulsionnelle pendant des périodes d'éclairage durant lesquelles la source impulsionnelle délivre l'énergie nécessaire.

Grâce au flash, l'énergie lumineuse nécessaire pour effectuer une prise de vues est concentrée pendant une durée très brève et au lieu d'intégrer pendant toute la durée de la trame d'observation de la caméra CCD, il suffit d'intégrer pendant la durée d'éclairage de la source impulsionnelle. Le temps d'intégration de prise de vues étant ainsi beaucoup plus court, la quantité d'énergie lumineuse parasite, provenant de l'éclairage ambiant et intégré par la caméra, est beaucoup moins importante.

Avantageusement, les périodes d'intégration sont toutes sensiblement concomitantes à des périodes d'éclairage.

Avantageusement encore, la source impulsionnelle est déclenchée pour toutes les périodes d'intégration.

Dans une variante plus perfectionnée, et toujours pour résoudre le problème de sensibilité lumineuse du capteur, les périodes d'intégration sont alternativement sensiblement concomitantes et non concomitantes à des périodes d'éclairage, afin de prendre alternativement des vues de l'empreinte éclairée par la source et des vues de l'empreinte non éclairée par la source, et des moyens de traitement numérique d'image sont agencés pour élaborer alternativement, à partir des vues prises, une image de l'empreinte éclairée par la source et une image de l'empreinte non éclairée par la source et pour soustraire les deux images l'une de l'autre afin d'élaborer une image de l'empreinte non soumise à l'éclairage ambiant.

Grâce à cela, on élimine les images des taches de gras polluant les images issues des prises de vues du capteur.

De préférence, les moyens de prise de vues sont agencés pour fonctionner dans des longueurs d'ondes visibles ou dans le proche infra-rouge.

Ainsi, l'utilisation du capteur est sans danger pour l'utilisateur.

L'invention sera mieux comprise à l'aide de la description suivante de plusieurs formes de réalisation du capteur optique d'empreinte digitale de l'invention en référence au dessin annexé sur lequel:

- la figure 1 représente une vue schématique de l'une des formes de réalisation de l'invention;

- la figure 2 représente une vue schématique d'une autre forme de réalisation de l'invention;

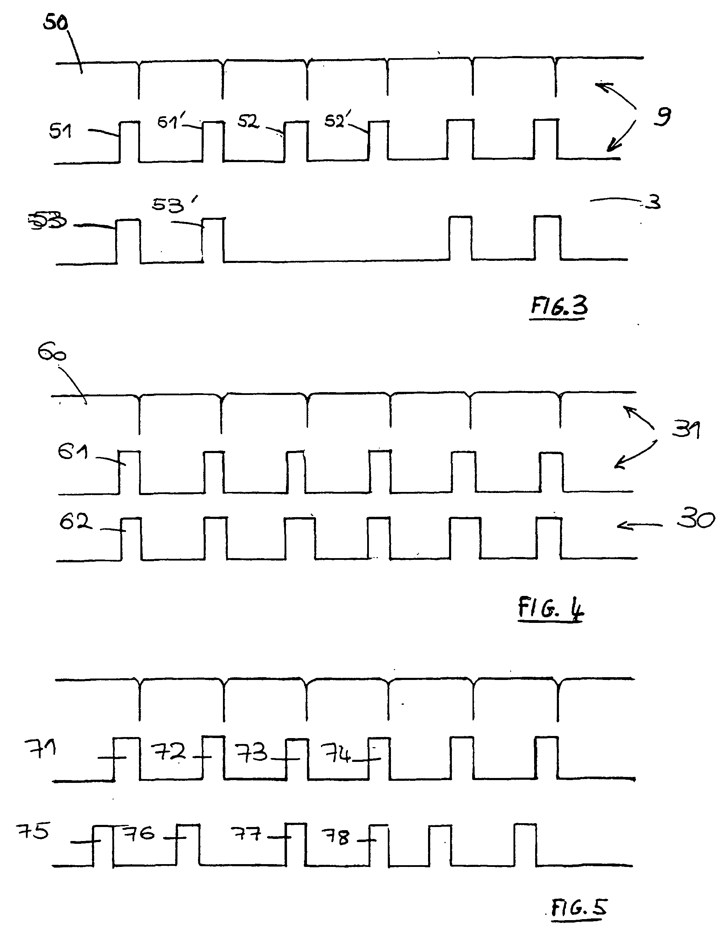

- la figure 3 représente un schéma de périodes d'éclairage et d'intégration du capteur d'empreinte de la figure 1 et
- la figure 4 représente un schéma de périodes d'éclairage et d'intégration du capteur d'empreinte de la figure 2.

Dans l'exemple particulier de la description qui suit, le capteur d'empreinte digitale est disposé à une entrée d'un lieu protégé d'accès sécurisé, afin de contrôler l'identité des personnes souhaitant accéder au lieu protégé par reconnaissance de leur empreinte digitale. Le capteur est destiné à élaborer, pour chacune des personnes, une image de leur empreinte, afin de la comparer à une base de données 21 contenant une pluralité d'images numériques correspondant aux empreintes digitales de personnes autorisées à accéder au lieu protégé.

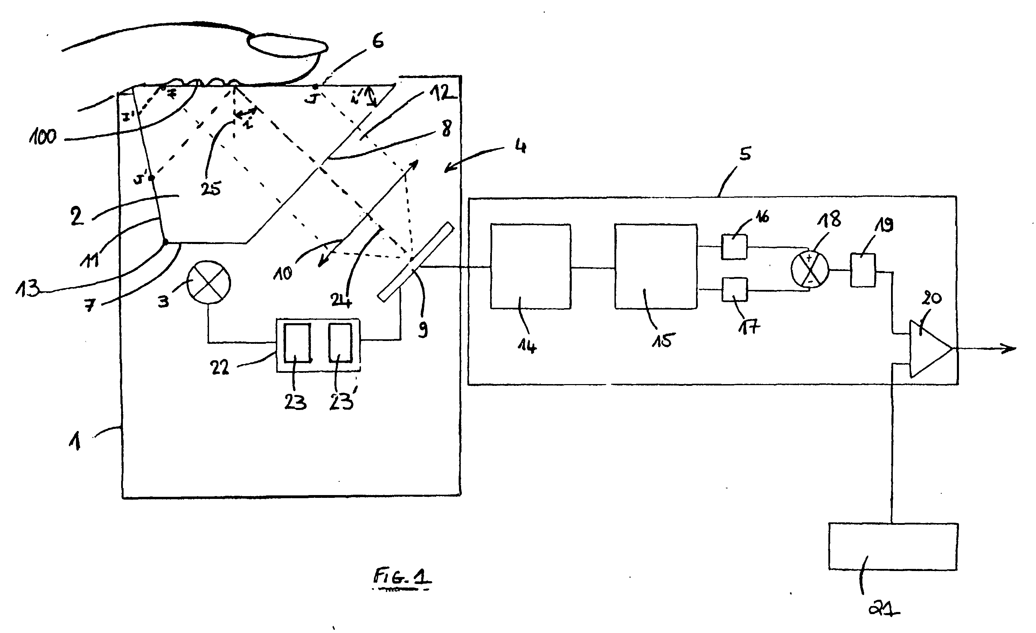

Le capteur d'empreinte digitale représenté sur la figure 1 comprend, dans un boîtier 1, un corps 2 de transmission optique, une source d'éclairage impulsionnelle de l'empreinte digitale 100, en l'espèce un flash 3, destiné à émettre de la lumière ici dans le proche infrarouge, et un dispositif 4 de prise de vues. A la place du flash 3, on pourrait également utiliser une diode électroluminescente ou une diode laser en mode flash.

Le dispositif 4 est associé à un dispositif 5 de traitement, ici numérique, d'image.

Le corps de transmission optique 2 présente ici une forme de polyèdre à six faces planes, et est constitué en un matériau laissant passer l'éclairage du flash 3, en l'espèce un milieu transparent d'indice 1,5. On rappelle que l'air, constituant le milieu environnant le capteur d'empreinte et plus particulièrement le corps 2, est d'indice 1.

Le corps de transmission optique 2 présente une face objet 6 support d'empreinte digitale, polie, sur laquelle la personne à identifier doit poser son doigt, et une face d'éclairage 7 de réception de la lumière du flash 3, les faces objet support 6 et d'éclairage 7 étant ici en face l'une de l'autre et parallèles entre elles. La face d'éclairage 7 est dépolie afin d'uniformiser l'éclairage de l'empreinte à l'aide du flash 3, et située au voisinage immédiat du flash 3.

Une face d'observation 8 est disposée entre la face objet support 6 et le dispositif 4 de prise de vues, les vues étant prises à travers le corps de transmission optique 2. La face d'observation 8 est inclinée sur la face objet support 6, l'angle interne i' entre ces deux faces 8 et 6 étant sensiblement égal à un angle d'observation i explicité plus loin.

Le corps de transmission optique 2 comprend également une face objet parasite 11, de liaison entre la face objet support 6 et la face d'éclairage 7, opposée à la face d'observation 8. La face parasite 11 est ici inclinée sur la face support 6, l'angle interne entre les deux faces 11 et 6 étant ici de 78°. En outre, la face parasite est absorbante, en l'espèce de couleur noire.

Le dispositif 4 de prise de vues comprend un capteur 9, en l'espèce un capteur CCD (Charge Coupled Device), de prise de vues, capable de fonctionner dans le visible ou le proche infrarouge, et associé à une optique de focalisation 10. La direction d'observation du dispositif 4, autrement dit l'axe optique de focalisation 24, est ici sensiblement perpendiculaire à la face d'observation 8, en conséquence l'angle d'incidence de la direction d'observation 24 par rapport à la normale 25 à la face objet support 6 est l'angle d'observation i.

Le dispositif 4 de prise de vues est destiné à observer l'empreinte digitale 100 par contraste entre les creux et les bosses formés par les sillons de l'empreinte 100. Le contraste n'est observable que dans les directions d'observation pour lesquelles les rayons lumineux d'observation sont totalement réfléchis sur la face objet support 6.

A la place du capteur CCD, on pourrait également utiliser un capteur CMOS.

Selon la loi optique de Descartes, les indices respectifs $n_i$ et $n_2$ du corps de transmission optique 2 et de l'air définissent un angle d'observation limite $\sigma_l$ de réflexion totale sur la face objet support 6, la réflexion étant totale sur la face support 6 si l'angle d'observation i satisfait à la condition suivante :

$$(n_1/n_2) \cdot \sin i \geq 1,$$

sin i étant inférieur à 1, par définition.

Du respect de cette condition, il résulte un domaine angulaire d'observation du dispositif 4 de prise de vues, qui comprend les angles d'observation i tels que : $\sigma_l \leq i \leq 90°$. Pour les indices $n_1$ (1,5) et $n_2$ (1) considérés, l'angle limite $\sigma_l$ est égal à 42°.

Dans ce domaine angulaire d'observation, le dispositif 4 de prise de vues peut observer par contraste le relief des creux et des bosses formés par les sillons de l'empreinte digitale, alors qu'il ne peut observer aucun contraste et ne peut donc pas distinguer les sillons de l'empreinte pour les angles d'observation i tels que $0 \leq i < \sigma_l$.

L'angle d'observation i du capteur d'empreinte est ici sensiblement égal mais supérieur à l'angle limite $\sigma_l$, afin d'observer les sillons de l'empreinte par contraste avec une distorsion minimale et une résolution optimale, et égal ici à 45°.

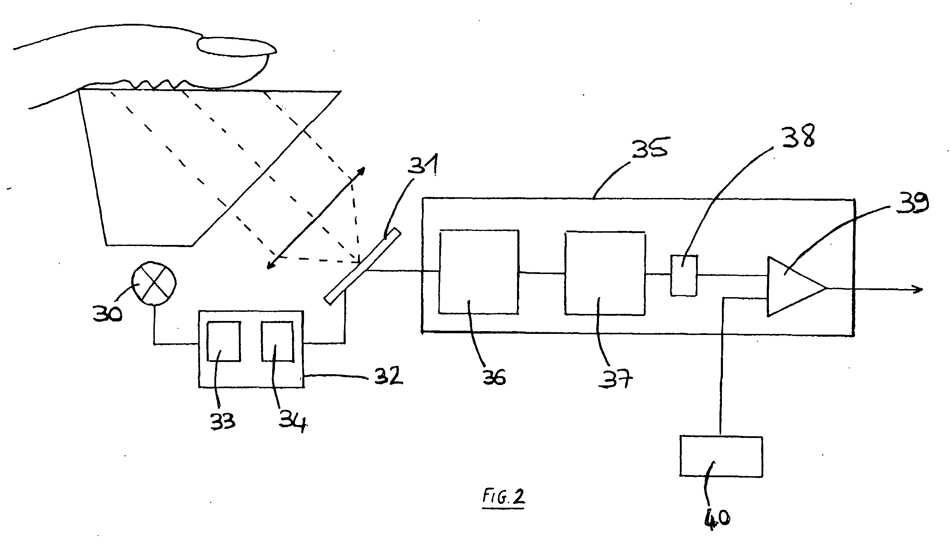

Le champ d'observation 12 du dispositif 4 de prise de vues couvre une zone utile de la face objet support 6, de largeur IJ dans le plan de coupe de la figure 2 (perpendiculaire à la face objet support 6), ainsi qu'une zone correspondante de la face objet parasite 11, de largeur I'J' dans le plan de la figure 1, observable par réflexion sur la face objet support 6. Ainsi, les deux faces support 6 et parasite 11 se trouvent dans le champ 12 observable par le dispositif 4.

La distance séparant la face objet support 6 et la face d'éclairage 7, autrement dit l'épaisseur du corps de transmission optique 2, satisfait aux deux conditions suivantes:

- l'arête 13 commune aux faces parasite 11 et d'éclairage 7 doit être située hors du champ 12 du dispositif 4 de prise de vues, afin de ne pas dégrader l'image de l'empreinte par superposition de l'image de l'arête 13, et
- l'épaisseur du corps de transmission optique 2 doit être minimale.

Les deux autres faces du corps de transmission optique 2 sont identiques, parallèles entre elles et en face l'une de l'autre, et constituent deux côtes opposés du corps de transmission optique 2.

Le dispositif 5 de traitement numérique d'image, relié en entrée au capteur CCD 9 comprend:

- un bloc d'acquisition numérique 14 relié en entrée au capteur CCD 9 et destiné à transformer les signaux analogiques délivrés par le capteur CCD 9 en données numériques;
- un bloc 15 de traitement numérique d'image connecté en entrée à la sortie du bloc d'acquisition et en sortie à deux mémoires de travail 16, 17, et destiné à élaborer des images numériques d'empreinte, c'est-à-dire des images sous forme de données;
- un soustracteur 18 à deux entrées respectivement reliées aux deux mémoires de travail 16,17 et à une sortie reliée à une autre mémoire de travail 19, et
- un comparateur 20 à deux entrées reliées respectivement à la mémoire de travail 19 de la sortie du soustracteur 18, et à une mémoire externe 21 contenant la base de données des empreintes des personnes autorisées à accéder au lieu protégé, et à une sortie reliée à une commande d'autorisation d'accès non représentée.

Le capteur comprend également un dispositif de synchronisation 22 relié au capteur CCD 9 et au flash d'éclairage 3 pour contrôler l'éclairage du flash 3 comme cela sera décrit plus loin.

Le dispositif de synchronisation intègre un bloc 23 de déclenchement et d'arrêt du flash 3, et un bloc 23' de commande de l'intégration du capteur 9, autrement dit de commande des prises de vues du capteur 9, pendant des périodes d'intégration successives (51, 51', 52, 52'). Les périodes d'intégration (51, 51', 52, 52') du capteur 9 sont de plus courte durée que les trames d'observation 50 du capteur 9. Dans l'exemple particulier de la description, les périodes d'intégration (51, 51' ; 52, 52') sont de 100 $\mu$s et les trames d'observation 50 de 16 ms.

Après la description structurelle du capteur d'empreinte digitale, son fonctionnement va maintenant être décrit.

La personne à identifier ayant posé son doigt sur la face objet support 6, le dispositif 4 prend des vues du doigt.

En fonctionnement, le capteur CCD 9 prend des vues de l'empreinte digitale 100 pendant les périodes d'intégration 51, 51', 52, 52' intervenant à la fin de chaque trame d'observation 50 du capteur CCD 9, pour obtenir des images ici réalisées sur deux trames d'observation, avec une fréquence d'image déterminée, en l'espèce 25 images par seconde. En sortie, le capteur CCD 9 délivre des signaux analogiques correspondant aux vues prises.

Sous la commande d'un signal de parité de trame, des périodes d'intégration du capteur 9 et des tops de transfert de trame, le dispositif de synchronisation 22 contrôle les déclenchements et arrêts successifs du flash 3 qui éclaire l'empreinte digitale pendant des périodes d'éclairage 53, 53' successives, pendant lesquelles le flash 3 délivre l'énergie nécessaire pour prendre des vues du capteur 9. Alternativement, le flash 3 fonctionne pendant deux périodes successives d'éclairage 53, 53' ici sensiblement concomitantes à deux périodes successives d'intégration 51, 51' du capteur 9, et ne fonctionne pas pendant les deux périodes suivantes d'intégration 52, 52' du capteur 9. Le capteur CCD prend ainsi alternativement des vues de l'empreinte 100 éclairée par le flash 3 et des vues de l'empreinte 100 non éclairée par le flash 3.

On soulignera que les vues du capteur CCD 9 étant prises pendant de courtes périodes d'intégration 51, 51', 52, 52', le capteur CCD 9 intègre peu d'énergie parasite provenant de la luminosité ambiante.

Le bloc d'acquisition 14 transforme les signaux analogiques délivrés par le capteur CCD 9 en données numériques correspondantes.

Le bloc 15 de traitement numérique d'image élabore une succession d'images de l'empreinte 100 à partir du flot de données délivré par le bloc d'acquisition 14 et à l'aide d'un algorithme de traitement de données. La succession d'images numériques comprend alternativement une image de l'empreinte 100 éclairée par le flash 3 et une image de l'empreinte 100 non éclairée par le flash 3, l'empreinte 100 étant dans tous les cas soumise à l'éclairage ambiant.

Le bloc 15 de traitement d'image mémorise sous forme numérique une image de l'empreinte éclairée par le flash 3 et une image de l'empreinte non éclairée par le flash 3, respectivement dans les deux mémoires de travail 16, 17. Puis le soustracteur 18 soustrait les deux images numériques l'une de l'autre, et l'image numérique résultante finale, représentant l'empreinte digitale 100 éclairée par la source 3 mais non soumise à l'éclairage ambiant, est stockée dans la mémoire de travail 19.

Enfin, le comparateur 20 compare cette image numérique finale aux images numériques d'empreinte de la base de données 21, et en cas d'identité seulement transmet, en sortie, un signal d'autorisation d'accès à la commande d'accès, la personne à identifier étant reconnue, par son empreinte digitale, comme faisant partie de la base de données.

Dans une variante et en référence à la figure 5, le dispositif de synchronisation fait fonctionner le flash lors de toutes les trames d'observation, les périodes d'éclairage 75-78 et les périodes d'intégration 71-74 étant alternativement sensiblement concomitantes 73, 74, 77, 78 pour prendre des vues de l'empreinte éclairée par le flash, et disjointes 71, 72, 75, 76 par décalage temporel pour prendre des vues de l'empreinte non éclairée par le flash. Le flash est ici déclenché puis arrêté juste avant le début des périodes d'intégration 71, 72 pour prendre les prises de vues de l'empreinte non éclairée par la source. Ainsi, la fréquence d'éclairage du flash n'est pas gênante pour un utilisateur.

Deux images de l'empreinte 100 respectivement éclairée et non éclairée par la source impulsionnelle sont élaborées à partir des vues prises et soustraites l'une de l'autre, à l'aide du bloc de traitement d'image, comme décrit précédemment.

Une autre forme de réalisation du capteur d'empreinte digitale, représentée sur la figure 2, ne diffère de la forme de réalisation dont la description vient d'être faite, que par les seuls éléments qui vont être maintenant décrits.

Une source impulsionnelle 30, ici un flash, est reliée à un capteur 31 de prise de vues, en l'espèce un capteur CCD, par l'intermédiaire d'un dispositif de synchronisation 32 intégrant un bloc 33 de déclenchement et d'arrêt du flash 30 et un bloc 34 de commande de l'intégration du capteur 31 pendant des périodes d'intégration 61, durant lesquelles le capteur 31 effectue des prises de vues successives. Les périodes d'intégration 61 ont lieu ici à la fin de chaque trame d'observation 60 du capteur CCD et durant ici environ 100 µs, la durée des trames d'observation étant sensiblement égale à 16 ms.

Le dispositif de synchronisation 32 est destiné à contrôler le fonctionnement du flash 30 pendant des périodes d'éclairage 62 ici sensiblement concomitantes avec toutes les périodes d'intégration 61 du capteur CCD 31, pendant lesquelles le flash 30 délivre l'énergie nécessaire pour les prises de vues du capteur 31.

Un dispositif 35 de traitement numérique d'image est connecté en entrée à la sortie du capteur CCD 31 et comprend, connectés en série et dans l'ordre, entre son entrée et sa sortie, les éléments suivants :

- un bloc d'acquisition numérique 36 destiné à être alimenté en vues du capteur CCD 31, les vues étant sous forme de données,
- un bloc de traitement numérique d'image 37 destiné à élaborer des images, sous forme de données, à partir des vues prises par le capteur 31 et acquises par le bloc d'acquisition 36,
- une mémoire de travail 38, et
- un comparateur 39 à deux entrées dont l'une est reliée à la mémoire 38 et l'autre à une mémoire externe 40 contenant la base de données des personnes autorisées d'accès, et une sortie reliée à une commande d'autorisation d'accès non représentée.

Le capteur d'empreinte digitale fonctionne comme suit :

Le dispositif de synchronisation 32 déclenche le flash 30 de façon synchrone avec toutes les périodes d'intégration 61 du capteur CCD 31, et l'arrête aux tops de transfert de trame d'observation 60 du capteur CCD 31. Ainsi, toutes les périodes d'intégration 61 du capteur CCD 31 sont sensiblement concomitantes aux périodes d'éclairage 62 du flash 3, le capteur CCD 31 ne prenant que des vues de l'empreinte éclairée par la source 30. Les vues étant prises pendant des périodes d'intégration très courtes, l'énergie parasite de la lumière ambiante intégrée est très faible.

Le dispositif 35 de traitement numérique d'image élabore des images successives de l'empreinte digitale 100 éclairée par le flash 30, à partir des vues successivement prises par le capteur 31, et les compare à la base de donnée 40, afin d'autoriser l'accès au lieu protégé, le cas échéant.

A propos de la face d'éclairage, elle pourrait tout aussi bien être polie, mais devrait dans ce cas être plus éloignée de la source d'éclairage.

A la place d'une base de données, on pourrait également envisager d'associer le capteur à un lecteur de carte personnelle à mémoire, à puce ou à bande magnétique par exemple, contenant l'image de l'empreinte digitale du titulaire de la carte personnelle.

Dans la description qui vient d'être faite des différentes formes de réalisation du capteur d'empreinte digitale à source impulsionnelle, les moyens de prise de vues ont une bande spectrale de détection large couvrant sensiblement le visible et le proche infra-rouge.

Dans une autre forme de réalisation plus perfectionnée, les moyens de prise de vues, en l'espèce une matrice de détection CCD, sont associées à un filtre optique destiné à adapter la bande spectrale de détection au spectre d'émission de la source impulsionnelle.

La source impulsionnelle, ici une diode laser utilisée en mode flash mais il pourrait également s'agir d'une diode électroluminescente, a un spectre d'émission continu concentré autour d'une longueur d'onde de 850 nm.

Le filtre optique est réalisé par dépôt, sur une plaque de verre transparent, d'une pluralité de couches minces d'indices variables respectivement destinées à transmettre certaines longueurs d'ondes et à en réfléchir d'autres. Le filtre présente ainsi une bande spectrale passante centrée autour de 850 nm et large d'environ quelques dizaines de nanomètres.

Le filtre est accolé à la matrice de détection pour éviter la réception d'énergie lumineuse parasite.

En fonctionnement, la matrice de détection, associée à son filtre optique, ne détecte que les longueurs d'ondes situées dans la bande passante du filtre, et élimine ainsi toutes les longueurs d'ondes qui ne proviennent pas de la source impulsionnelle. De ce fait, les vues de l'empreinte digitale sont prises avec un minimum de bruit provenant de longueurs d'onde inutiles.

Enfin dans la description qui vient d'être faite, le corps de transmission optique comprend une face objet parasite inclinée sur la face objet support, l'angle d'observation du capteur CCD étant sensiblement égal à l'angle limite δl. Cet exemple particulier de la description ne doit en aucun cas être considéré de manière limitative.

**Revendications**

1. Capteur optique d'empreinte digitale comprenant un corps de transmission optique (2) présentant une face (6) support de l'empreinte digitale (100), des moyens (9; 31) de prise de vues et une source d'éclairage (3; 30), de l'empreinte à travers le corps de transmission optique, **caractérisé par le fait que** la source d'éclairage (3; 30) est impulsionnelle, et reliée aux moyens (9; 31) de prise de vues par l'intermédiaire d'un dispositif de synchronisation (22; 32) intégrant des moyens (23; 33) pour déclencher et arrêter la source impulsionnelle (3; 30) et des moyens (23' ; 34) pour contrôler l'intégration des moyens (9 ; 31) de prise de vues pendant des périodes d'intégration (51, 51', 52, 52' ; 61), le dispositif de synchronisation (22 ; 32) étant agencé pour faire fonctionner la source impulsionnelle (3 ; 30) pendant des périodes d'éclairage (53, 53'; 62) durant lesquelles la source impulsionnelle (3 ; 30) délivre l'énergie nécessaire.

2. Capteur d'empreinte digitale selon la revendication 1, dans lequel les périodes d'intégration (61) sont toutes sensiblement concomitantes à des périodes d'éclairage (62).

3. Capteur d'empreinte digitale selon la revendication 1, dans lequel les périodes d'intégration (51, 51', 52, 52'; 71-74) sont alternativement sensiblement concomitantes et non concomitantes à des périodes d'éclairage (53, 53'; 75-78) , afin de prendre alternativement des vues de l'empreinte éclairée par la source (3) et des vues de l'empreinte non éclairée par la source (3), et des moyens (5) de traitement numérique d'image sont agencés pour élaborer alternativement, à partir des vues prises, une image de l'empreinte éclairée par la source (3) et une image de l'empreinte non éclairée par la source (3) et pour soustraire les deux images l'une de l'autre afin d'élaborer une image de l'empreinte non soumise à l'éclairage ambiant.

4. Capteur d'empreinte digitale selon la revendication 3, dans lequel les périodes d'éclairage (53, 53') sont toutes sensiblement concomitantes à des périodes d'intégration (51, 51').

5. Capteur d'empreinte digitale selon la revendication 3, dans lequel les périodes d'éclairage (75-78) sont alternativement sensiblement concomitantes et disjointes par décalage temporel par rapport aux périodes d'intégration (71-74) afin d'obtenir une fréquence d'éclairage tolérable pour un utilisateur.

6. Capteur optique d'empreinte digitale selon l'une des revendications 1 à 5, dans lequel les moyens (9; 31) de prise de vues sont agencés pour fonctionner dans des longueurs d'ondes visibles ou dans le proche infrarouge.

7. Capteur optique d'empreinte digitale selon l'une des revendications 1 à 6, dans lequel les moyens de prise de vues sont associés à des moyens agencés pour adapter la bande spectrale de détection des moyens de prise de vues au spectre d'émission de la source impulsionnelle.

8. Capteur d'empreinte digitale selon l'une des revendication 1 à 5, dans lequel le corps de transmission optique (2) comprend outre la face (6) support de l'empreinte digitale (100), une face d'éclairage (7) de réception de la lumière de la source d'éclairage impulsionnelle (3), et une face d'observation (8), entre la face (6) support d'empreinte digitale (100) et les moyens de prise de vues, les vues étant prises sous un angle d'observation supérieur à un angle limite δl du corps (2).

**Claims**

1. Optical fingerprint sensor comprising an optical transmission body (2) with a support face (6) for the fingerprint (100), means (9, 31) of taking shots and a lighting source (3; 30) for the print through the optical transmission body, **characterised in that** the lighting source (3; 30) is by pulses and is connected to the means (9; 31) of taking shots by means of a synchronisation device (22; 32) integrating means (23; 33) to actuate and stop the pulse source (3; 30) and means (23'; 34) to control integration of the means (9; 31) of taking shots during integration periods (51, 51', 52, 52'; 61), the synchronisation device (22; 32) being configured to operate the pulse source (3; 30) during lighting periods (53, 53'; 62) during which the pulse source (3; 30) supplies the necessary power.

2. Fingerprint sensor according to claim 1, in which the integration periods (61) are all approximately concomitant with lighting periods (62).

**3.** Fingerprint sensor according to claim 1, in which the integration periods (51, 51', 52, 52'; 71-74) are alternately approximately concomitant and non-concomitant with lighting periods (53, 53'; 75-78) in order to take shots of the print lit by the source (3) and shots of the print not lit by the source (3) alternately, and digital image processing means (5) are configured to produce an image of the print lit by the source (3) and an image of the print not lit by the source (3) alternately from the shots taken and subtract the two images from one another to produce an image of the print not exposed to the ambient lighting.

**4.** Fingerprint sensor according to claim 3, in which the lighting periods (53, 53') are all approximately concomitant with integration periods (51, 51').

**5.** Fingerprint sensor according to claim 3, in which the lighting periods (75-78) are alternately approximately concomitant and separated by time shift in relation to integration periods (71-74) in order to obtain a tolerable lighting frequency for a user.

**6.** Optical fingerprint sensor according to one of claims 1 to 5, in which the means (9; 31) of taking shots are configured to operate in visible wavelengths or the near infrared.

**7.** Optical fingerprint sensor according to one of claims 1 to 6, in which the means of taking shots are combined with means configured to adapt the spectral band of detection of the means of taking shots to the emission spectrum of the pulse source.

**8.** Fingerprint sensor according to one of claims 1 to 5, in which the optical transmission body (2) consists, in addition to the support face (6) for the fingerprint (100), of a lighting face (7) receiving the light from the lighting source by pulses (3) and an observation face (8) between the support face (6) for the fingerprint (100) and the means of taking shots, the shots being taken at an angle of observation above a limit angle δl of the body (2).

**Patentansprüche**

**1.** Optischer Fingerabdrucksensor mit einem optischen Übertragungskörper (2), der eine Trägerfläche (6) für den Fingerabdruck (100), Aufnahmeeinrichtungen (9; 31) und eine Lichtquelle (3; 30) für den Abdruck durch den optischen Übertragungskörper aufweist, **dadurch gekennzeichnet, dass** die Lichtquelle (3; 30) eine impulsartig arbeitende und mit den Aufnahmeeinrichtungen (9; 31) mittels einer Synchronisationsvorrichtung (22; 32) verbunden ist, welche Einrichtungen (23; 33), um die impulsartig arbeitende Lichtquelle (3; 30) an- und auszuschalten, und Einrichtungen (23';34) integrieren, um die Integration der Aufnahmeeinrichtungen (9; 31) in Integrationsperioden (51, 51', 52, 52'; 61) zu steuern, wobei die Synchronisationsvorrichtung (22; 32) so eingerichtet ist, dass sie die impulsartig arbeitende Lichtquelle (3; 30) in Beleuchtungsperioden (53, 53'; 62) in Betrieb setzt, während denen die impulsartig arbeitende Lichtquelle (3; 30) die benötigte Energie abgibt.

**2.** Optischer Fingerabdrucksensor nach Anspruch 1, bei dem die Integrationsperioden (61) alle im Wesentlichen gleichzeitig mit den Beleuchtungsperioden (62) auftreten.

**3.** Optischer Fingerabdrucksensor nach Anspruch 1, bei dem die Integrationsperioden (51, 51', 52, 52'; 71 - 74) abwechselnd im Wesentlichen gleichzeitig oder nicht gleichzeitig mit den Beleuchtungsperioden (53, 53'; 75 - 78) auftreten, um abwechselnd Aufnahmen des von der Lichtquelle (3) beleuchteten Abdrucks und Aufnahmen des nicht von der Lichtquelle (3) beleuchteten Abdrucks zu machen, und digitale Bildbearbeitungseinrichtungen (5) so eingerichtet sind, dass sie abwechselnd aus den gemachten Aufnahmen ein Bild des von der Lichtquelle (3) beleuchteten Abdrucks und ein Bild des nicht von der Lichtquelle (3) beleuchteten Abdrucks erstellen, und dass sie die beiden Bilder voneinander abziehen, um ein Bild des Abdrucks, der nicht der Umgebungsbeleuchtung ausgesetzt ist, zu erstellen.

**4.** Optischer Fingerabdrucksensor nach Anspruch 3, bei dem die Beleuchtungsperioden (53, 53') alle im Wesentlichen gleichzeitig mit den Integrationsperioden (51, 51') auftreten.

**5.** Optischer Fingerabdrucksensor nach Anspruch 3, bei dem die Beleuchtungsperioden (75 - 78) abwechselnd im Wesentlichen gleichzeitig auftreten und um einen Zeitversatz gegenüber den Integrationsperioden (71 - 74) getrennt sind, um eine für einen Benutzer erträgliche Beleuchtungsfrequenz zu erzielen.

**6.** Optischer Fingerabdrucksensor nach einem der Ansprüche 1 bis 5, bei dem die Aufnahmeeinrichtungen (9; 31) so eingerichtet sind, dass sie in sichtbaren Wellenlängen oder im nahen Infrarot arbeiten.

**7.** Optischer Fingerabdrucksensor nach einem der Ansprüche 1 bis 6, bei dem die Aufnahmeeinrichtungen mit Einrichtungen verbunden sind, die so eingerichtet sind, dass sie das Erfassungsspektralband der Aufnahmeeinrichtungen dem Emissionsspektrum der impulsartig arbeitenden Lichtquelle anpassen.

8. Optischer Fingerabdrucksensor nach einem der Ansprüche 1 bis 5, bei dem der optische Übertragungskörper (2) außer der Trägerfläche (6) für den Fingerabdruck (100) noch eine Beleuchtungsfläche (7) zur Aufnahme des Lichts der impulsartig arbeitenden Beleuchtungsquelle (3) und eine Beobachtungsfläche (8) zwischen der Trägerfläche (6) für den Fingerabdruck (100) und den Aufnahmeeinrichtungen umfasst, wobei die Aufnahmen unter einem Beobachtungswinkel gemacht werden, der größer ist als ein Grenzwinkel $\delta 1$ des Körpers (2).

Fig. 1

FIG.2

50

51   61'   52   52'   9

53   53'   3

_FIG.3_

60

61   31

62   30

_FIG. 4_

71   72   73   74

75   76   77   78

_FIG.5_